# EUROPEAN PATENT APPLICATION

(11) **EP 0 702 052 A1**
(43) Date of publication of application: **20.03.1996**
(21) Application number: 94306853.6
(22) Date of filing: 19.09.1994
(51) Int. Cl.: C08K 5/18, C08L 23/02, C08L 23/10, C09J 7/02, B65D 85/78

(54) **Conical wound polyolefin packaging**

(71) Applicant: UNILEVER PLC, London EC4P 4BQ (GB)
(72) Inventor: Burgin, Emanuele, I-40069 Zola Predosa (Bologna) (IT); Hunter, Jeffrey, Unilever Res. Colworth Lab., Bedford, M44 1LQ (GB); Nestori, Sergio, I-21052 Busto Arsizio (Varese) (IT); Petroni, Marco, I-55015 Montecarlo (Lucca) (IT); Serrao, Giacinto, I-20030 Bovisio Masciago (Milan) (IT); Stradi, Pietro, I-81020 San Leucio (Caserta) (IT); van den Broeke, Hans, NL-3055 RH Rotterdam (NL)
(74) Representative: Kirsch, Susan Edith

(57) **Abstract**

Packaging for conical ice confections is made from polyolefin films having Elmendorf values lower than 0.8N in both machine direction and cross direction. The films are obtained from compositions comprising (percentages by weight):
A) from 70% to 90% of a polyolefin matrix containing not less than 30% of one or more crystalline propylene homopolymers and/or copolymers having a flexural modulus greater than or equal to 1800 MPa;
B) from 10% to 30% of one or more mineral fillers.

This packaging can be handled on standard machinery; it is light and can be metallised and printed.

## Description

### Field of the Invention

This invention relates to packaging designed to contain ice confections in cone form. Ice confections are popular items for consumption and are sold in a variety of designs. A typical form comprises an ice confection contained in a cone shaped wafer. The ice confection may fill all or part of the volume of the wafer cone and may extend above the top edge of the cone. The cone provides a convenient means of hand holding an ice confection with the means itself being edible.

### Background to the invention

Ice confection wafer cones can be filled immediately before consumption, eg. in a shop or from a travelling vehicle, but a large proportion of ice confection cones are prepared on factory premises and then transported to the point of sale. These products require packaging to maintain freshness and give protection, eg. physical and microbial during transport. The packaging will preferably be in the form of a conical sleeve and have a lid covering the surface of the confection. The conical sleeve can be retained during consumption and removed piece by piece as the product is eaten.

A typical commercial sleeve comprises paper laminated with aluminium foil. This laminate requires the production of two separate sheet feed stocks and lamination machinery to provide a sheet product having the desired properties of handling, shape retention and printing. Laminates in general use a mixture of feed stocks and these provide a waste which can be difficult to re-use or dispose of without special processing.

Thus there is a need for a packaging formed from a single material. The packaging must be handled by standard machinery.

### General Description of the Invention

The present invention uses polyolefin films for packaging having specific Elmendorf values for both machine direction (M.D.) and cross (transverse) direction (T.D.). These films can be used in those packaging sectors, the food sectors in particular, where the packaging must be easy to tear in all directions, and where the tear must occur in a given direction. The invention provides a conical pack for ice confections comprising a flexible blank film in sheet form having the shape of a segment of a circle wound and sealed along a seam, characterised in that the blank film is homogeneous and comprises a polymeric material having the composition (% by weight):
A) from 70% to 90%, preferably from 75% to 90%, more preferably from 75% to 85%, of a polyolefin matrix containing not less than 30%, preferably not less than 50%, more preferably not less than 70%, of one or more crystalline propylene homopolymers and/or copolymers having a flexural modulus (measured according to ASTM D 790 at 23°C) greater than or equal to 1800 MPa, preferably greater than or equal to 1900 MPa, more preferably greater than or equal to 2000 MPa; and
B) from 10% to 30%, preferably from 10% to 25%, more preferably from 15% to 25%, of one or more mineral fillers.

The term homogeneous means the sheet has a consistent composition throughout its volume, that is the mineral filler is evenly dispersed, and there are no sheets laminated to it.

The films used for packaging of the present invention possess Elmendorf values (measured according to ASTM D 1922) lower than 0.8 N, in particular ranging from 0.3 to 0.8 N, preferably from 0.3 to 0.5 N, both in the machine direction (MD) and transverse direction (TD), therefore they tear easily in any direction.

In fact, in order to be able to tear the film easily the Elmendorf values, which represent the tear strength offered by the film to the tear propagation, must be relatively low. In order for the above property to be about equal in any direction (isotropy), the Elmendorf values in the machine direction and cross direction must be comprised within a very narrow interval, thus avoiding the possibility that the tear propagation occur in a preferential direction (i.e. in the direction which is characterized by lower Elmendorf values). Preferably the difference in the MD and TD measurements is less than about 0.15 N.

It is preferred that the films of the present invention be nonoriented, i.e. that they be cast films. The thickness of the films generally ranges from 50 to 150 micrometers, preferably from 90 to 120 micrometers.

Preferably the crystalline propylene homopolymers and copolymers present in matrix A) have an isotactic index of at least 94%, more preferably at least 96%, measured in xylene at 25°C. In fact, by way of polymerization in one or more stages with highly stereospecific Ziegler-Natta catalysts, one can obtain crystalline propylene homopolymers and copolymers having flexural modulus values even higher than 2000 MPa in correspondence to the above mentioned isotactic index values. Moreover, the molecular weight distribution of the above mentioned high modulus propylene polymers is generally broad, preferably with Mw/Mn values ranging from 7 to 30 (Mw and Mn refer to the weight average molecular weight and number average molecular weight respectively).

The above mentioned crystalline propylene copolymers can contain one or more comonomers selected from ethylene and/or C₄-C₈ α-olefins. Examples of C₄-C₈ α-olefins are: 1-butene, 1-pentene, 1-hexene, 3-methyl-1-pentene, 4-methyl-1-pentene, 1-hexene, 1-octene. In order to maintain high flexural modulus values it is preferred the content of comonomers in the copolymers be low, generally less than or equal to about 10% by weight, in particular less than or equal to 5% by weight.

Matrix A) can also optionally contain up to 70% by weight of one or more conventional olefin polymers, i.e. having a flexural modulus lower than 1800 MPa, selected in particular from the polymers and copolymers of ethylene, propylene, and C₄-C₈ α-olefins. Preferred examples are isotactic polypropylene, and crystalline copolymers of propylene containing up to 15% by weight of ethylene and/or C₄-C₈ α-olefins. Specific examples of C₄-C₈ α-olefins have been already given in reference to the high modulus propylene polymers. Obviously, the MFR (Melt Flow Rate) of the compositions which essentially constitute the films of the present invention must be suited for film production. Generally speaking the MFR L (measured according to ASTM D 1238) of the above mentioned compositions ranges from about 3 to about 15g/10 min.

Specific examples of mineral fillers B) are talc calcium carbonate, silica, clay, diatomaceous earths, titanium oxide, and zeolites. The preferred one is talc.

The particle size of the mineral filler is not critical; provided the filler can be distributed and gives a smooth surface without brittleness. With particular reference to talc, one can use particles having an average diameter ranging from about 0.5 to about 40 micrometers.

In addition to the mineral fillers, the composition which essentially makes up the films of the present invention may contain the additives commonly used for polyolefins, such as stabilizers and pigments.

The above composition can be prepared by using known techniques starting from pellets, or powders, or polymer particles obtained from polymerization, that are preferably preblended in the solid state (with a Banbury, Henshel, or Lodige mixer, for example) with the filler of fillers B). A dry blend is obtained which can be pelletized in an extruder using conventional techniques. It is also possible to feed the dry blend directly into the film processing systems.

The films of the present invention are obtained from the above mentioned composition by using the well known processes for polyolefin films production.

In particular, the cast films can be prepared by using flat die extruders, operating, for example, at temperatures ranging from 200°C to 280°C.

For the uses described above, the films of the present invention can be subjected to finishing processes, such as metallization. This is carried out by depositing metal vapour, for example, aluminium, under vacuum, on at least one of the film surfaces properly treated (by way of corona discharge using metal powders as feedstock, for example). The metallic layer thus obtained is generally from 1 to 5 Ångstrom units thick.

The packaging can easily be obtained starting from the films, which are cut into the proper size and then glued or thermowelded (optionally after the addition of a layer of a heat-sealing material). The waste from a film after cutting the blanks can be reworked directly because it consists of a homogeneous material.

This package has the properties of being prepared using standard packaging machinery and maintains its rigidity on reel wind up. The surface receives printing and can be metallised. It has good tear characteristics.

### Specific Description of the Invention

One example will now be given to illustrate but not limit the invention.

### EXAMPLE

A blend of the following components, in the form of extruded pellets was produced using a Henshel mixer:
i) 66.6% by weight of a propylene homopolymer having an isotactic index of 98.5%, flexural modulus of 2300 MPa, and MRFL of 3.7 g/10 min;
ii) 33.4% by weight of a concentrate comprising 65% by weight of talc (average diameter of about 10 micron), 5% by weight of titanium dioxide (average diameter of about 1 micron), and 30% by weight of a propylene homopolymer having an isotactic index of 96.5%, flexural modulus of 1600 MPa, and MFRL of 400 g/10 min.

The dry blend thus obtained was fed to a single screw extruder having a screw length/diameter ratio of 30, and extruded into film by way of a flat die with a 1 mm slit. The temperature in the extruder's cylinder was 240°-250°C and the temperature of the extruder's die was 250°C. The winding speed of the film was 46 m/min.

A 100 micrometers thick film was obtained which had a paper-like appearance, was opaque, and had no tears.

The Elmendorf test was carried out on this film and the results were 0.4 N in the machine direction, and 0.5 N in the cross direction. This test was performed on 12 strips of the film in a bundle.

The film was cut to the standard from shape used to prepare cone packaging for ice confections. This was then rolled and sealed in the cone form using the hot melt adhesive Berimelt 418 obtainable from National Starch Chemical Company of 10 Finderne Avenue, Bridgewater, New Jersey 08807, U.S.A. Standard commercial machinery was used.
The package was storable at -40°C and accepted printing and metallisation. The cone top was closed by a paper board cap sealed to the cone edge by heat sealing, adhesive or ultrasonics. The material used in the manufacture of this cap is not critical and examples of other materials are polymeric materials, eg the same material as the cone, paper coated with a polymer, eg polyethylene or polypropylene. This cap is removed and disposed of separately allowing the polypropylene film to be torn away as the ice confection is eaten. The cap preferably has the form of a circle with radially directed inward cuts around the periphery. These cuts, positioned at about 5 mm spacing and extending radially inwardly to distance of about 5mm, allow the periphery to be folded up to contact the inner surface of the cone edge. The surfaces were then sealed using one of the conventional methods disclosed previously. This form of cap allows inward and outward pressures to be directed onto the seal as it forms. Thus a good seal is obtained at a rapid rate of production.
The physical nature of the package provides tamper proof evidence at the top because any opening would tear the package.

## Claims

1. A conical pack comprising a sheet form flexible blank film in sheet form having the shape of segment from a circle wound and sealed along a seam, characterised in that the blank film is homogeneous and comprises a polymeric material having the composition comprising (% by weight):
A) from 70% to 90% of a polyolefin matrix containing not less than 30% of one or more crystalline propylene homopolymers and/or copolymers having a flexural modulus greater than or equal to 1800 MPa; and
B) from about 10% to about 30% by weight of one or more intimately mixed mineral fillers.

2. A pack according to claim 1 wherein the film is a cast film.

3. A pack according to claim 1 or 2, wherein the propylene crystalline copolymers have a flexural modulus of at least 1800 MPa and contain one or more comonomers selected from ethylene and/or C₄-C₈ α-olefins.

4. A pack according to claim 1 or 2, wherein the propylene crystalline homopolymers and copolymers present in matrix A) and have a flexural modulus of at least 1800 MPa and an isotactic index higher than 94%.

5. A pack according to claim 1 or 2, wherein matrix A) contains up to 70% by weight of one or more homopolymers or copolymers of ethylene, propylene, and C₄-C₈ α-olefins, having a flexural modulus lower than 1800 MPa.

6. A pack according to any preceding claim wherein the Elmendorf MD & TD measurements differ by less than about 0.15N.

7. A pack according to claim 5 or 6, wherein the homo- or copolymers having flexural modulus lower than 1800 MPa are selected from isotactic polypropylene and propylene crystalline copolymers containing up to 15% by weight of ethylene and/or C₄-C₈ α-olefins.

8. A pack according to any preceding claim; wherein mineral filler or fillers B) are selected from talc, calcium carbonate, silica, clays, diatomaceous earths, titanium oxide, and zeolites.

9. A pack according to any preceding claim, comprising, at least on one side, a metallic layer with a thickness ranging from 1 to 5 Ångstrom units.
